# EUROPÄISCHE PATENTSCHRIFT

(11) **EP 3 478 947 B1**
(45) Veröffentlichungstag und Bekanntmachung des Hinweises auf die Patenterteilung: **05.08.2020**
(21) Anmeldenummer: 17731158.6
(22) Anmeldetag: 20.06.2017
(51) Int. Cl.: F01N 3/28

(54) **MISCHERVORRICHTUNG FÜR EIN ABGASNACHBEHANDLUNGSSYSTEM EINES KRAFTFAHRZEUGS, ABGASNACHBEHANDLUNGSSYSTEM UND KRAFTFAHRZEUG**
MIXER DEVICE FOR AN EXHAUST-GAS AFTERTREATMENT SYSTEM OF A MOTOR VEHICLE, EXHAUST-GAS AFTERTREATMENT SYSTEM, AND MOTOR VEHICLE
DISPOSITIF MÉLANGEUR POUR UN SYSTÈME DE POST-TRAITEMENT DES GAZ D'ÉCHAPPEMENT D'UN VÉHICULE À MOTEUR, SYSTÈME DE POST-TRAITEMENT DES GAZ D'ÉCHAPPEMENT ET VÉHICULE À MOTEUR

(30) Priorität: 29.06.2016 DE 102016211703
(43) Veröffentlichungstag der Anmeldung: 08.05.2019
(73) Patentinhaber: Robert Bosch GmbH, 70442 Stuttgart (DE)
(72) Erfinder: JARUVATEE, Chaiwat, 70176 Stuttgart (DE); KLOECKNER, Siegurd, 50939 Koeln (DE)
(86) Internationale Anmeldenummer: PCT/EP2017/065046
(87) Internationale Veröffentlichungsnummer: WO 2018/001789

(56) Entgegenhaltungen:
- DE-A1-102011 051 875
- DE-A1-102014 117 687
- DE-T5-112012 006 957
- DE-T5-112014 003 949
- DE-U1-202015 003 874
- US-A1- 2009 071 133
- US-A1- 2015 240 692

## Beschreibung

Die Erfindung betrifft eine Mischervorrichtung für ein Abgasnachbehandlungssystem eines Kraftfahrzeugs, die ein zylinderförmiges Gehäuse mit einer Mantelwand, einer ersten Stirnwand und einer zweiten Stirnwand aufweist, wobei in der Mantelwand eine Einspritzöffnung für ein Abgasnachbehandlungsmittel ausgebildet ist, und wobei in dem Gehäuse zumindest ein sich gekrümmt erstreckendes Luftleitelement angeordnet ist, das einen Abgasstrom von zumindest einer Einlassöffnung zu einer in der zweiten Stirnwand ausgebildeten Auslassöffnung leitet.

Ferner betrifft die Erfindung ein Abgasnachbehandlungssystem mit einer derartigen Mischervorrichtung sowie ein Kraftfahrzeug mit einem entsprechenden Abgasnachbehandlungssystem.

### Stand der Technik

Zur Nachbehandlung von Abgasen, insbesondere von Dieselmotoren, sind unterschiedliche Verfahren und Vorrichtungen bekannt, die dazu dienen, die schädlichen Bestandteile des Abgases zu reduzieren. Ein häufig verwendetes Verfahren ist die sogenannte selektive katalytische Reduktion (SCR) zur Reduzierung der NOx-Bestandteile im Abgas. Dabei wird als Abgasnachbehandlungsmittel eine wässrige Harnstofflösung in den Abgasstrom eingespritzt, die sich mit dem Abgas vermischt und stromabwärts in einem Katalysator zusammen mit dem Abgas reagiert, um das NOx zu reduzieren. Das Ergebnis der Abgasnachbehandlung ist dabei durch eine verbesserte Durchmischung von Abgasnachbehandlungsmittel und Abgas optimierbar. So ist es bekannt, zum Vermischen eine Mischervorrichtung vorzusehen, wie sie beispielweise bereits in der Offenlegungsschrift DE 10 2013 005 206 B3 beschrieben ist. Diese Mischervorrichtung weist in dem Gehäuse ein spiralförmig verlaufendes Luftleitelement auf, was dazu führt, dass der Abgasstrom einen Drall erhält, und dass bei nur geringem Bauraum eine möglichst lange Mischstrecke zur Verfügung gestellt wird. Das Luftleitelement führt den Abgasstrom von der Einlassöffnung zu einer Auslassöffnung in der zweiten Stirnwand, wo das Abgasstrom-Abgasnachbehandlungsmittel-Gemisch aus der Mischvorrichtung austritt und dem SCR-Katalysator zugeführt wird. Aufgrund der immer strenger werden Abgasregulierungen werden große Anstrengungen unternommen, die Emissionen, insbesondere den NOx-Anteil im Abgas zu reduzieren. Dies hat unter anderem zur Folge, dass die Temperatur des Abgasstroms abnimmt. Dies hat für den SCR-Katalysator den Nachteil, dass es schwieriger ist, die notwendige Reaktionstemperatur für die Reduzierung der NOx-Bestandteile zu erreichen. Normalerweise ist der SCR-Katalysator weit weg von dem Verbrennungsmotor angeordnet, wodurch weitere Temperaturverluste entstehen. Umso näher der Katalysator an dem Verbrennungsmotor angeordnet ist, beziehungsweise umso kürzer der Weg ist, den der Abgasstrom von dem Verbrennungsmotor bis zu dem Katalysator überwinden muss, desto besser ist das Nachbehandlungsergebnis.

Die Offenlegungsschrift DE 10 2014 117 687 A1 offenbart eine Mischervorrichtung der gattungsgemäßen Art. Die Mischervorrichtung weist eine Aufprallfläche für das Abgasnachbehandlungsmittel auf, die senkrecht zur Einspritzrichtung des Abgasnachbehandlungsmittels ausgerichtet ist. Dabei ist außerdem vorgesehen, dass die Mischervorrichtung eine Heizeinrichtung zum Heizen der Aufprallfläche aufweist.

### Offenbarung der Erfindung

Die erfindungsgemäße Mischervorrichtung mit den Merkmalen des Anspruchs 1 hat den Vorteil, dass auf kleinem Raum eine noch weiter verbesserte Vermischung von Abgas und Abgasnachbehandlungsmittel erfolgt, wobei die Mischervorrichtung nahe zum Verbrennungsmotor anordenbar ist und dennoch einen ausreichenden Mischweg für eine ausreichende Vermischung gewährleistet. Erfindungsgemäß wird dies dadurch erreicht, dass die Einlassöffnung in der ersten Stirnwand ausgebildet ist, und dass in dem Gehäuse zumindest eine Aufprallfläche für den Abgasstrom und/oder das Abgasnachbehandlungsmittel stromabwärts der Einlassöffnung angeordnet ist, wobei die Aufprallfläche zumindest im Wesentlichen senkrecht zur Einspritzrichtung des Abgasnachbehandlungsmittels ausgerichtet ist. Die erfindungsgemäße Ausgestaltung der Mischervorrichtung führt dazu, dass das Abgasnachbehandlungsmittel in dem Gehäuse auf die Aufprallfläche zumindest im Wesentlichen senkrecht auftrifft, wodurch eine Zerstäubung des insbesondere flüssigen Abgasnachbehandlungsmittels erfolgt. Dadurch werden größere Tropfen des Abgasnachbehandlungsmittels in kleinere Tropfen aufgeteilt, die sich leichter mit dem Abgasstrom vermengen können. Darüber hinaus erfolgt außerdem eine vorteilhafte Wärmeübertragung zwischen dem Abgasstrom und der Aufprallfläche.

Erfindungsgemäß ist vorgesehen, dass in dem Gehäuse stromabwärts der Einlassöffnung zumindest ein weiteres Luftleitelement parallel zu dem gekrümmt, insbesondere sprialförmig verlaufenden Luftleitelement angeordnet ist, das wenigstens ein seitlich vorstehendes die Aufprallfläche bildendes Aufprallelement aufweist. Das weitere Luftleitelement erstreckt sich vorzugsweise nicht über die gesamte Länge des Luftleitelements, sondern nur über einen Abschnitt dessen, sodass das weitere Luftleitelement kürzer ausgebildet ist, als das Luftleitelement. An dem Luftleitelement ist das wenigstens eine Aufprallelement ausgebildet, welches die Aufprallfläche für das Abgasnachbehandlungsmittel und den Abgasstrom bereitstellt. Durch die vorteilhafte Ausbildung des weiteren Luftleitelements wird die Gasführung in dem Gehäuse weiter verbessert und eine Wärmeübertragung von dem Abgasstrom auf das Gehäuse und anders herum in vorteilhafter Weise ermöglicht.

Weiterhin ist bevorzugt vorgesehen, dass das weitere Luftleitelement mehrere Aufprallelemente aufweist, die jeweils eine Aufprallfläche bilden. Damit ist das weitere Luftleitelement mit mehreren Aufprallflächen versehen und das Zerstäuben des Abgasnachbehandlungsmittels wird entsprechend verbessert. Insbesondere sind die Aufprallelemente jeweils beabstandet zueinander an dem weiteren Luftleitelement angeordnet, um insbesondere auch Bereiche zur Verfügung zu stellen, in welchen der Abgasstrom parallel zur Erstreckung des Luftleitelements barrierefrei strömen kann, sodass die Strömungsgeschwindigkeit des Abgasstroms nicht zu weit reduziert und unerwünschte Turbolenzen im Abgasstrom vermieden werden.

Gemäß einer bevorzugten Ausgestaltung der Erfindung ist vorgesehen, dass das jeweilige Aufprallelement als aus dem weiteren Luftleitelement herausgebogene Aufprallzunge ausgebildet ist. Das Aufprallelement oder die Aufprallelement sind insofern insbesondere einstückig mit dem weiteren Luftleitelement ausgebildet und dadurch kostengünstig und montagefreundlich realisierbar.

Erfindungsgemäß ist vorgesehen, dass in der ersten Stirnwand mehrere Einlassöffnungen ausgebildet sind. Dadurch gelangt der Abgasstrom durch mehrere Einlassöffnungen in das Gehäuse. Dadurch, dass die Einlassöffnungen in der ersten Stirnwand ausgebildet sind, gelangt der Abgasstrom zumindest abschnittsweise axial in das Gehäuse. Vorzugsweise ist den Einlassöffnungen ein Zuströmkanal zugeordnet, welcher derart ausgerichtet ist, dass der Abgasstrom nicht axial, sondern schräg in das Gehäuse eingeleitet wird, sodass er in Richtung des weiteren Luftleitelements geführt ist und das Erzeugen des Dralls in dem Gehäuse unterstützt.

Erfindungsgemäß ist vorgesehen, dass die erste Stirnwand in einem sich parallel zu der Einspritzrichtung des Abgasnachbehandlungsmittels erstreckenden Abschnitt aufweist, der öffnungsfrei beziehungsweise geschlossen ausgebildet ist. Dadurch wird gewährleistet, dass zumindest in diesem Abschnitt der Abgasstrom nicht direkt in das Gehäuse eindringt und dadurch das in das Gehäuse eingespritzte Abgasnachbehandlungsmittel derart ablenkt, dass dieses nicht mehr auf das weitere Luftleitelement trifft. Der Abschnitt ist insofern derart gewählt, dass der Strom des eingespritzten Abgasnachbehandlungsmittels durch das Abgas nicht von dem weiteren Luftleitelement abgelenkt wird. Vielmehr ist vorgesehen, dass die Einlassöffnungen benachbart zu dem Abschnitt angeordnet sind, sodass sich eine vorteilhafte Vermengung mit dem Abgasnachbehandlungsmittel insbesondere im Bereich des weiteren Luftleitelements ergibt.

Erfindungsgemäß ist vorgesehen, dass der Abschnitt auf Höhe der Einspritzöffnung beginnt und beabstandet zu dem zumindest einen weiteren Luftleitelement endet. Insbesondere ist eine der Einlassöffnungen dem Luftleitelement vorgeschaltet, sodass in diesem Bereich eine Vermischung mit dem eingespritzten Abgasnachbehandlungsmittel bereits stromaufwärts oder direkt an dem weiteren Luftleitelement erfolgt.

Weiterhin ist bevorzugt vorgesehen, dass die Auslassöffnung in der zweiten Stirnwand exzentrisch angeordnet ist. Dadurch wird ein Druckabfall der Mischervorrichtung reduziert, indem der Querschnitt des Strömungskanals durch das Gehäuse vergrößert wird. Die Auslassöffnung ist vorzugsweise kreisförmig oder ovalförmig ausgebildet. Alternativ kann die Auslassöffnung aber auch eine andere Querschnittsform aufweisen. Insbesondere wird eine Querschnittsform gewählt, welche in der Mischvorrichtung den Druckabfall weiter reduziert und eine gleichmäßige Beaufschlagung des stromabwärts liegenden SCR-Katalysators mit dem Abgasstrom-Abgasnachbehandlungsmittel-Gemisch optimiert.

Das erfindungsgemäße Abgasnachbehandlungssystem mit den Merkmalen des Anspruchs 9 zeichnet sich durch die erfindungsgemäße Ausbildung der Mischervorrichtung aus. Es ergeben sich hierbei die bereits genannten Vorteile.

Das erfindungsgemäße Kraftfahrzeug mit den Merkmalen des Anspruchs 10 zeichnet sich durch das erfindungsgemäße Abgasnachbehandlungssystem aus. Auch hier ergeben sich die bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erörtert werden. Dazu zeigen
- Figur 1: eine Mischervorrichtung für ein Abgasnachbehandlungssystem eines Kraftfahrzeugs in einer Draufsicht und
- Figur 2: die Mischervorrichtung in einer perspektivischen Darstellung.

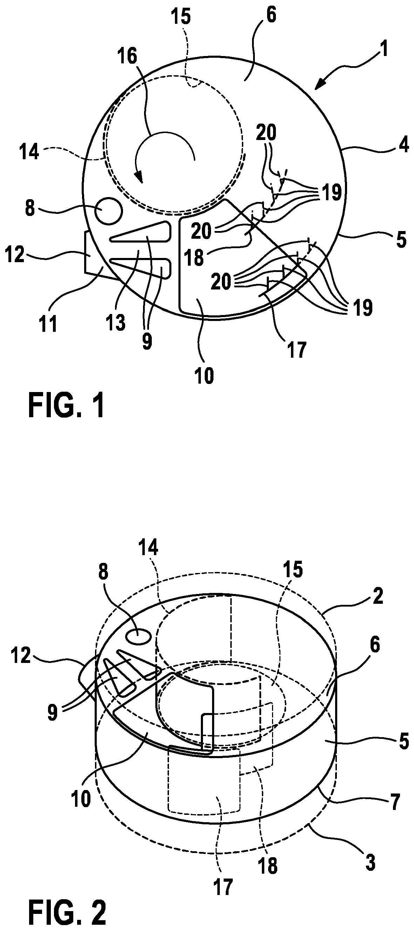

Figur 1 zeigt in einer vereinfachten Draufsicht eine Mischervorrichtung 1 für ein hier nicht näher dargestelltes Abgasnachbehandlungssystem eines Kraftfahrzeugs. Die Mischervorrichtung list insbesondere strömungstechnisch zwischen einem Oxidationskatalysator und einem SCR-Katalysator oder einem SCR beschichteten Partikelfilter stromabwärts einer Brennkraftmaschine anordenbar und dient dazu, ein Abgasnachbehandlungsmittel mit dem Abgasstrom des Verbrennungsmotors optimal zu vermischen, sodass in dem stromabwärts liegenden SCR-Katalysator eine vorteilhafte Reduktion von Stickoxiden erfolgen kann.

Figur 2 zeigt die Mischervorrichtung 1 in einer perspektivischen Darstellung, wobei der stromaufwärts liegende Oxidationskatalysator 2 und der stromabwärts liegende SCR-Katalysator 3 oder SCR beschichtete Partikelfilter gestrichelt angedeutet sind.

Die Mischervorrichtung 1 weist ein Gehäuse 4 auf, das eine sich vorliegend kreisförmig erstreckende Mantelwand 5 sowie eine erste Stirnwand 6 und eine zweite Stirnwand 7 aufweist. Die Stirnwände 5 und 6 sind parallel zueinander ausgerichtet und gemäß der Höhe der Mantelwand 5 beabstandet zueinander angeordnet. Das Gehäuse 4 ist insofern zylinderförmig ausgebildet.

Die erste Stirnwand 6 weist mehrere Einlassöffnungen 8, 9 und 10 auf. Die Einlassöffnung 8 ist dabei optional kreisförmig, die Einlassöffnungen 9 sind keilförmig und die Einlassöffnung 10 kreissegmentförmig ausgebildet. Auf die Anordnung und Ausbildung der Einlassöffnungen 8, 9 und 10 wird später noch weiter eingegangen.

Die Mantelwand 5 weist eine Einspritzöffnung 11 für flüssiges Abgasnachbehandlungsmittel auf, wobei die Einspritzöffnung 11 am Ende eines Einspritzstutzens 12 ausgebildet ist. Der Einspritzstutzen 12 dient beispielsweise zur Aufnahme eines Einspritzventils, sodass mittels des Einspritzventils ein dosiertes Einspritzen des Abgasnachbehandlungsmittels direkt an der Mischervorrichtung 1 erfolgt. Der Stutzen 12 ist dabei derart ausgerichtet, dass das flüssige Abgasnachbehandlungsmittel in Richtung einer Sekante in das Gehäuse 4 eingespritzt wird.

Die erste Einlassöffnung 8 ist dabei etwas stromaufwärts der Einspritzöffnung 11 angeordnet, die Einlassöffnungen 9 beginnen etwa auf Höhe der Einspritzöffnung 11 und erstrecken sich im Wesentlichen parallel zur Einspritzrichtung, wobei sich ihre lichte Weite dabei erweitert, wodurch sich die zuvor bereits genannte Keilform ergibt. Die beiden Einlassöffnungen 9 sind dabei spiegelbildlich zueinander angeordnet, sodass zwischen ihnen ein Abschnitt 13 liegt, der öffnungsfrei ausgebildet ist. Dieser Abschnitt 13 erstreckt sich von der Einspritzöffnung 11 bis zu der Einlassöffnung 10 in der Stirnwand 6. Durch den Abschnitt 13 wird sichergestellt, dass in diesem Bereich der Abgasstrom nicht direkt senkrecht auf das eingespritzte Abgasnachbehandlungsmittel trifft, wodurch der Abgasstrom den Einspritzmittelstorm abdrängt beziehungsweise gegen die Stirnwand 7 des Gehäuses 2 abgelenkt werden würde.

In dem Gehäuse 4 ist weiterhin ein Luftleitelement 14 angeordnet, das sich spiralförmig und exzentrisch in dem Gehäuse 4 erstreckt, sodass der Abgasstrom und das eingespritzte Nachbehandlungsmittel zu einer exzentrisch in der Stirnwand 7 ausgebildeten Auslassöffnung 15 geführt wird. Durch die Spiralform wird der Strömungsweg in dem Gehäuse 4 maximieret. Gemäß dem vorliegenden Ausführungsbeispiel erstreckt sich das Luftleitelement 14 halbkreisförmig entlang der Außenkontur der kreisförmigen Auslassöffnung 15. Dabei beginnt das Luftleitelement 14 an der Mantelwand 5, wodurch sich der spiralförmige Verlauf ergibt. Das Abgasnachbehandlungsmittel und der Abgasstrom treffen zunächst auf die Außenseite des Luftleitelements 14 und werden anschließend durch die Mantelwand 5 der Innenseite des Luftleitelements 14 zugeführt, welches den Strom der Auslassöffnung 15 zuführt. Dabei ergibt sich ein Drall in dem Abgas-Abgasnachbehandlungsmittel-Gemisch, wie durch einen Pfeil 16 angedeutet.

Parallel zu dem Luftleitelement 14 sind vorliegend zweit weitere Luftleitelemente 17 und 18 angeordnet, die kürzer ausgebildet sind als das Luftleitelement 14 und sich entlang einer Umfanglinie erstrecken, deren Radius den gleichen Ursprung aufweist, wie der Radius des Luftleitelements 14.

Die weiteren Luftleitelemente 17, 18 weisen jeweils mehrere seitlich vorstehende Aufprallelemente 19 auf. Die Aufprallelemente 19 bilden jeweils eine Aufprallfläche 20, die der Einspritzöffnung 11 zugewandt ist. Die Aufprallelemente 19 sind dabei derart ausgerichtet, dass die Aufprallflächen 20 im Wesentlichen senkrecht zur Einspritzrichtung des Abgasnachbehandlungsmittels liegen. Vorliegend sind die Aufprallelemente 19 als Aufprallzungen ausgebildet, welche aus den weiteren Luftleitelementen 17, 18 herausgebogen sind. Die weiteren Luftleitelemente 17, 18 sind insoweit einstückig mit den jeweiligen Aufprallelementen 19 ausgebildet. Die weiteren Luftleitelemente 17, 18 können beispielsweise als Blechstanzbiegeteile gefertigt sein.

Die weiteren Luftleitelemente 18, 19 sind bereichsweise auf Höhe der Einlassöffnung 10 angeordnet, sodass durch die Einlassöffnung 10 einströmendes Abgas direkt auf die Luftleitelemente 17, 18 treffen kann.

Im Betrieb wird der Abgasstrom somit durch die Einlassöffnungen 8, 9 und 10 in das Gehäuse 4 eingeführt, während das Abgasnachbehandlungsmittel durch die Einspritzöffnung 11 in das Gehäuse 4 eingespritzt wird. Aufgrund des vorteilhaften Abschnitts 13 gelangt das eingespritzte Abgasnachbehandlungsmittel auf die Aufprallflächen 20 und zerstäubt dort und wird vorteilhaft mit dem ebenfalls einströmenden Abgasstrom vermischt. Durch das Luftleitelement 14 und die Erstreckung der Luftleitelemente 17, 18 wird das Abgasstrom-Abgasnachbehandlungsmittel-Gemisch entlang der Mantelwand 5 und des Luftleitelements 14 der Auslassöffnung 15 zugeführt, wodurch sich der Drall 16 ergibt. Der Drall 16 bewirkt eine vorteilhafte Beaufschlagung des stromabwärts liegenden SCR-Katalysators oder SCR-beschichteten Partikelfilters, sodass sich eine vorteilhafte Abgasnachbehandlung ergibt.

Die vorteilhafte Mischervorrichtung 1 hat den Vorteil einer bauraumsparenden Ausgestaltung mit einem langen Strömungsweg, der eine vorteilhafte Vermischung erlaubt. Darüber hinaus wird eine vorteilhafte Zerstäubung des Abgasnachbehandlungsmittels gewährleistet. Das Anordnen eines oder mehrerer Sensoren an der Mischervorrichtung, insbesondere stromaufwärts des Vermischungsbereichs, ist ohne weiteres möglich, um die Abgasnachbehandlung zu überwachen. Das Einspritzventil ist einfach und kostengünstig an dem Gehäuse 4 beziehungsweise an der Mischervorrichtung 1 anordenbar. Die Mischervorrichtung 1 erlaubt die maximale Ausnutzung der Wärmeenergie des Abgasstroms an den Aufprallflächen beziehungsweise den weiteren Luftleitelementen 17, 18, wodurch die Robustheit der Mischervorrichtung gegenüber dem Abgasnachbehandlungsmittel erhöht wird.

## Patentansprüche

1. Mischervorrichtung (1) für ein Abgasnachbehandlungssystem eines Kraftfahrzeugs, die ein zylinderförmiges Gehäuse (4) mit einer Mantelwand (5), einer ersten Stirnwand (6) und einer zweiten Stirnwand (7) aufweist, wobei in der Mantelwand (5) eine Einspritzöffnung (11) für ein Abgasnachbehandlungsmittel ausgebildet ist, und wobei in dem Gehäuse (4) zumindest ein sich gekrümmt erstreckendes Luftleitelement (14) angeordnet ist, das einen Abgasstrom von mehreren Einlassöffnungen (8,9,10) zu einer in der zweiten Stirnwand (7) ausgebildeten Auslassöffnung (15) führt, wobei die Einlassöffnungen (8,9,10) in der ersten Stirnwand (6) ausgebildet sind, und in dem Gehäuse (4) zumindest eine Aufprallfläche (20) für das Abgasnachbehandlungsmittel stromabwärts der Einlassöffnung (8,9,10) angeordnet ist, wobei die Aufprallfläche (20) senkrecht zur Einspritzrichtung des Abgasnachbehandlungsmittels ausgerichtet ist, **dadurch gekennzeichnet, dass** in dem Gehäuse ein weiteres Luftleitelement (17,18) angeordnet ist, das wenigstens ein seitlich vorstehendes, die Aufprallfläche (20) bildendes Aufprallelement (19) aufweist, wobei die erste Stirnwand (6) einen sich parallel zur Einspritzrichtung erstreckenden öffnungsfrei ausgebildeten Abschnitt (13) aufweist, der auf Höhe der Einspritzöffnung (11) beginnt und beabstandet von dem weiteren Luftleitelement (17,18) endet, und dass die Einlassöffnungen (9) benachbart zu dem Abschnitt (13) angeordnet sind.

2. Mischervorrichtung nach einem der vorhergehenden Ansprüche, **dadurch gekennzeichnet, dass** das weitere Luftleitelement (17,18) mehrere Aufprallelemente (19) mit jeweils einer Aufprallfläche (20) aufweist.

3. Mischervorrichtung nach einem der vorhergehenden Ansprüche, **dadurch gekennzeichnet, dass** das jeweilige Aufprallelement (19) als aus dem jeweiligen Luftleitelement (17,18) herausgebogene Aufprallzunge ausgebildet ist.

4. Mischervorrichtung nach einem der vorhergehenden Ansprüche, **dadurch gekennzeichnet, dass** die Auslassöffnung (15) in der zweiten Stirnwand (7) exzentrisch angeordnet/ausgebildet ist.

5. Abgasnachbehandlungssystem für ein Kraftfahrzeug, mit wenigstens einer Mischervorrichtung (1), für ein Abgasstrom einer Brennkraftmaschine sowie ein flüssiges Abgasnachbehandlungsmittel zuführbar ist, **gekennzeichnet durch** die Ausbildung der Mischervorrichtung (1) nach einem der Ansprüche 1 bis 4.

6. Kraftfahrzeug mit einer Brennkraftmaschine und einem Abgasnachbehandlungssystem für die Brennkraftmaschine, **gekennzeichnet durch** die Ausbildung der Abgasnachbehandlungssystems gemäß Anspruch 5.

## Claims

1. Mixer apparatus (1) for an exhaust gas aftertreatment system of a motor vehicle, which mixer apparatus (1) has a cylindrical housing (4) with a shell wall (5), a first end wall (6) and a second end wall (7), an injection opening (11) for an exhaust gas aftertreatment medium being configured in the shell wall (5), and at least one air guiding element (14) which extends in a curved manner being arranged in the housing (4), which air guiding element (14) conducts an exhaust gas flow from a plurality of inlet openings (8, 9, 10) to an outlet opening (15) which is configured in the second end wall (7), the inlet openings (8, 9, 10) being configured in the first end wall (6), and at least one impact face (20) for the exhaust gas aftertreatment medium being arranged downstream of the inlet opening (8, 9, 10) in the housing (4), the impact face (20) being oriented perpendicularly with respect to the injection direction of the exhaust gas aftertreatment medium, **characterized in that** a further air guiding element (17, 18) is arranged in the housing, which further air guiding element (17, 18) has at least one laterally projecting impact element (19) which forms the impact face (20), the first end wall (6) having a section (13) of opening-free configuration which extends parallel to the injection direction, begins at the level of the injection opening (11) and ends in a manner which is spaced apart from the further air guiding element (17, 18), and **in that** the inlet openings (9) are arranged adjacently with respect to the section (13).

2. Mixer apparatus according to one of the preceding claims, **characterized in that** the further air guiding element (17, 18) has a plurality of impact elements (19) with in each case one impact face (20).

3. Mixer apparatus according to either of the preceding claims, **characterized in that** the respective impact element (19) is configured as an impact tongue which is bent out of the respective air guiding element (17, 18).

4. Mixer apparatus according to one of the preceding claims, **characterized in that** the outlet opening (15) is arranged/configured eccentrically in the second end wall (7) .

5. Exhaust gas aftertreatment system for a motor vehicle, with at least one mixer apparatus (1), for an exhaust gas flow of an internal combustion engine and a liquid exhaust gas aftertreatment medium can be fed, **characterized by** the configuration of the mixer apparatus (1) according to one of Claims 1 to 4.

6. Motor vehicle with an internal combustion engine and an exhaust gas aftertreatment system for the internal combustion engine, **characterized by** the configuration of the exhaust gas aftertreatment system according to Claim 5.

## Revendications

1. Dispositif mélangeur (1) pour un système de post-traitement des gaz d'échappement d'un véhicule automobile, lequel possède un boîtier de forme cylindrique (4) ayant une paroi d'enveloppe (5), une première paroi frontale (6) et une deuxième paroi frontale (7), une ouverture d'injection (11) pour un agent de post-traitement des gaz d'échappement étant formée dans la paroi d'enveloppe (5), et au moins un élément déflecteur d'air (14) qui s'étend de manière curviligne étant disposé dans le boîtier (4), lequel guide un flux de gaz d'échappement de plusieurs ouvertures d'admission (8, 9, 10) vers une ouverture de sortie (15) formée dans la deuxième paroi frontale (7), les ouvertures d'admission (8, 9, 10) étant formées dans la première paroi frontale (6), et au moins une surface de collision (20) pour l'agent de post-traitement des gaz d'échappement étant disposée dans le boîtier (4) en aval de l'ouverture d'admission (8, 9, 10), la surface de collision (20) étant orientée perpendiculairement à la direction d'injection de l'agent de post-traitement des gaz d'échappement, **caractérisé en ce qu'**un élément déflecteur d'air supplémentaire (17, 18) est disposé dans le boîtier, lequel possède un élément de collision (19) faisant saillie latéralement qui forme la surface de collision (20), la première paroi frontale (6) possédant une portion (13) formée sans ouverture qui s'étend parallèlement à la direction d'injection, laquelle commence à la hauteur de l'ouverture d'injection (11) et se terminant espacée de l'élément déflecteur d'air supplémentaire (17, 18), et **en ce que** les ouvertures d'admission (9) sont disposées adjacentes à la portion (13) .

2. Dispositif mélangeur selon l'une des revendications précédentes, **caractérisé en ce que** l'élément déflecteur d'air supplémentaire (17, 18) possède plusieurs éléments de collision (19) ayant respectivement une surface de collision (20).

3. Dispositif mélangeur selon l'une des revendications précédentes, **caractérisé en ce que** l'élément de collision (19) respectif est réalisé sous la forme d'une languette de collision courbée vers l'extérieur hors de l'élément déflecteur d'air (17, 18) respectif.

4. Dispositif mélangeur selon l'une des revendications précédentes, **caractérisé en ce que** l'ouverture de sortie (15) est disposée/configurée excentrique dans la deuxième paroi frontale (7).

5. Système de post-traitement des gaz d'échappement pour un véhicule automobile, comprenant au moins un dispositif mélangeur (1), pour un flux de gaz d'échappement d'un moteur à combustion interne et un agent de post-traitement des gaz d'échappement peut être acheminé, **caractérisé par** la configuration du dispositif mélangeur (1) selon l'une des revendications 1 à 4.

6. Véhicule automobile équipé d'un moteur à combustion interne et d'un système de post-traitement des gaz d'échappement pour le moteur à combustion interne, **caractérisé par** la configuration du système de post-traitement des gaz d'échappement selon la revendication 5.
